(19) Europäisches Patentamt
European Patent Office
Office européen des brevets

(11) **EP 2 659 486 B1**

(12) **EUROPEAN PATENT SPECIFICATION**

(45) Date of publication and mention
of the grant of the patent:
**23.03.2016 Bulletin 2016/12**

(21) Application number: **11853083.1**

(22) Date of filing: **15.11.2011**

(51) Int Cl.:
*G10L 17/00* (2013.01)   *G10L 15/02* (2006.01)
*H04M 1/725* (2006.01)   *H04N 5/14* (2006.01)
*H04N 5/91* (2006.01)   *H04N 21/44* (2011.01)
*H04N 5/77* (2006.01)   *H04N 21/422* (2011.01)
*H04N 21/439* (2011.01)   *H04N 21/442* (2011.01)
*G10L 25/57* (2013.01)   *G06K 9/00* (2006.01)

(86) International application number:
**PCT/FI2011/051002**

(87) International publication number:
**WO 2012/089906 (05.07.2012 Gazette 2012/27)**

(54) **METHOD, APPARATUS AND COMPUTER PROGRAM FOR EMOTION DETECTION**

VERFAHREN, VORRICHTUNG UND COMPUTERPROGRAMM ZUR EMOTIONSERKENNUNG

PROCÉDÉ, APPAREIL ET PROGRAMME INFORMATIQUE DESTINÉS À DÉTECTER DES ÉMOTIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2010 IN CH40192010**

(43) Date of publication of application:
**06.11.2013 Bulletin 2013/45**

(73) Proprietor: **Nokia Technologies Oy**
**02610 Espoo (FI)**

(72) Inventors:
• **ATRI, Rohit**
**Bangalore 560062 (IN)**
• **PATIL, Sidharth**
**Bangalore 560011 (IN)**
• **S V, Basavaraja**
**Bangalore 560003 (IN)**

(74) Representative: **Berggren Oy Ab**
**P.O. Box 16**
**Eteläinen Rautatiekatu 10A**
**00101 Helsinki (FI)**

(56) References cited:
CN-A- 101 789 990   JP-A- 2009 111 938
KR-A- 20090 055 425   KR-A- 20100 001 928
US-A1- 2006 028 556   US-A1- 2006 222 214
US-A1- 2007 201 731   US-A1- 2010 026 815

## Description

### TECHNICAL FIELD

Various implementations relate generally to method, apparatus, and computer program product for emotion detection in electronic devices.

### BACKGROUND

An emotion is usually experienced as a distinctive type of mental state that may be accompanied or followed by bodily changes, expression or actions. There are few basic types of emotions or emotional states experienced by human beings, namely, anger, 'disgust', fear, surprise, and sorrow, from which more complex combinations can be constructed.

With advancement in science and technology, it has become possible to detect varying emotions and moods of human beings. The detection of emotions is usually performed by speech and/or video analysis of the human beings (see for example JP2009111938 A).

The speech analysis may include analysis of the voice of the human being, while the video analysis includes an analysis of a video recording of the human being. The process of emotion detection by using audio analysis is computationally less intensive. The results obtained by the audio analysis may be less accurate. The process of emotion detection by using video analysis provides relatively accurate results since video analysis process utilizes complex computation techniques. The use of complex computation techniques may make the process of video analysis computationally intensive, thereby increasing the load on a device performing the video analysis. The memory requirement for the video analysis is comparatively higher than that required for the audio analysis.

### SUMMARY OF SOME EMBODIMENTS

Various aspects of examples embodiments are set out in the claims.

In a first aspect, there is provided a method according to claim 1.

In a second aspect, there is provided an apparatus according to claim 14.

In a third aspect, there is provided a computer program according to claim 15.

### BRIEF DESCRIPTION OF THE FIGURES

The embodiments of the invention are illustrated by way of example, and not by way of limitation, in the figures of the accompanying drawings in which:

FIGURE 1 illustrates a device in accordance with an example embodiment;

FIGURE 2 illustrates an apparatus for facilitating emotion detection in accordance with an example embodiment;

FIGURE 3 depicts illustrative examples of variation of at least one speech element with time in accordance with an example embodiment;

FIGURE 4 is a flowchart depicting an example method for facilitating emotion detection, in accordance with an example embodiment; and

FIGURE 5 is a flowchart depicting an example method for facilitating emotion detection, in accordance with another example embodiment.

### DETAILED DESCRIPTION

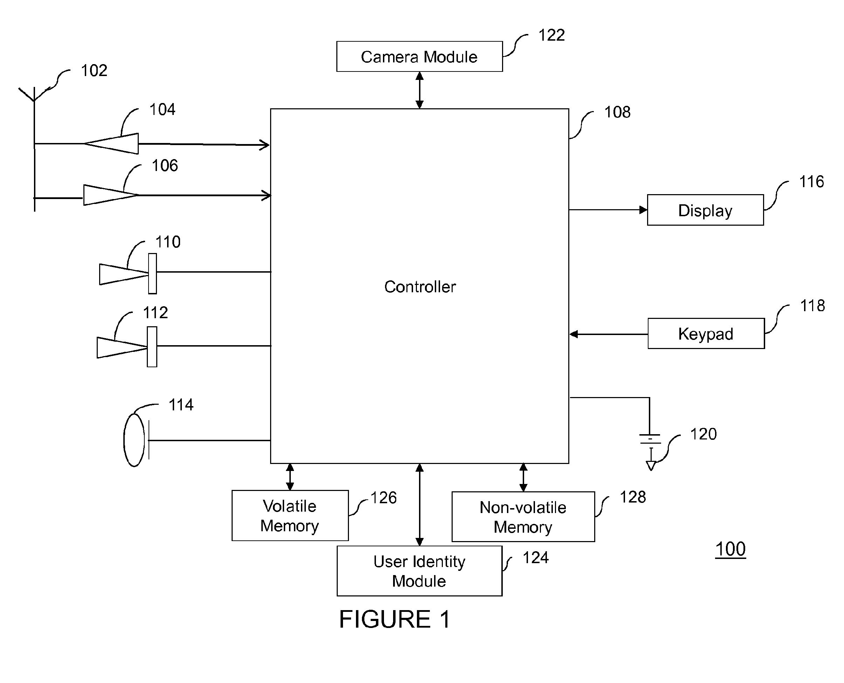

Example embodiments and their potential effects are understood by referring to FIGURES 1 through 5 of the drawings.

FIGURE 1 illustrates a device 100 in accordance with an example embodiment. It should be understood, however, that the device 100 as illustrated and hereinafter described is merely illustrative of one type of device that may benefit from various embodiments, therefore, should not be taken to limit the scope of the embodiments. As such, it should be appreciated that at least some of the components described below in connection with the device 100 may be optional and thus in an example embodiment may include more, less or different components than those described in connection with the example embodiment of FIGURE 1. The device 100 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.

The device 100 may include an antenna 102 (or multiple antennas) in operable communication with a transmitter 104 and a receiver 106. The device 100 may further include an apparatus, such as a controller 108 or other processing device that provides signals to and receives signals from the transmitter 104 and receiver 106, respectively. The signals may include signaling information in accordance with the air interface standard of the applicable cellular system, and/or may also include data corresponding to user speech, received data and/or user generated data. In this regard, the device 100 may be capable of operating with one or more air interface standards, communication protocols, modulation types, and access types. By way of illustration, the device 100 may be capable of operating in accordance with any of a number of first, second, third and/or fourth-generation communication protocols or the like. For example, the device 100 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA1000, wideband CDMA (WCDMA) and time division-synchronous CDMA (TD-SCDMA), with 3.9G wireless communication protocol such as evolved- universal terrestrial radio access network (E-UTRAN), with fourth-generation (4G) wireless communication protocols, or the like. As an alternative (or additionally), the device 100 may be capable of operating in accordance with non-cellular communication mechanisms. For example, computer networks such as the Internet, local area network, wide area networks, and the like; short range wireless communication networks such as include Bluetooth® networks, Zigbee® networks, Institute of Electric and Electronic Engineers (IEEE) 802.11x networks, and the like; wireline telecommunication networks such as public switched telephone network (PSTN).

The controller 108 may include circuitry implementing, among others, audio and logic functions of the device 100. For example, the controller 108 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 100 are allocated between these devices according to their respective capabilities. The controller 108 thus may also include the functionality to convolutionally encode and interleave message and data prior to modulation and transmission. The controller 108 may additionally include an internal voice coder, and may include an internal data modem. Further, the controller 108 may include functionality to operate one or more software programs, which may be stored in a memory. For example, the controller 108 may be capable of operating a connectivity program, such as a conventional Web browser. The connectivity program may then allow the device 100 to transmit and receive Web content, such as location-based content and/or other web page content, according to a Wireless Application Protocol (WAP), Hypertext Transfer Protocol (HTTP) and/or the like. In an example embodiment, the controller 108 may be embodied as a multi-core processor such as a dual or quad core processor. However, any number of processors may be included in the controller 108.

The device 100 may also comprise a user interface including an output device such as a ringer 110, an earphone or speaker 112, a microphone 114, a display 116, and a user input interface, which may be coupled to the controller 108. The user input interface, which allows the device 100 to receive data, may include any of a number of devices allowing the device 100 to receive data, such as a keypad 118, a touch display, a microphone or other input device. In embodiments including the keypad 118, the keypad 118 may include numeric (0-9) and related keys (#, *), and other hard and soft keys used for operating the device 100. Alternatively or additionally, the keypad 118 may include a conventional QWERTY keypad arrangement. The keypad 118 may also include various soft keys with associated functions. In addition, or alternatively, the device 100 may include an interface device such as a joystick or other user input interface. The device 100 further includes a battery 120, such as a vibrating battery pack, for powering various circuits that are used to operate the device 100, as well as optionally providing mechanical vibration as a detectable output.

In an example embodiment, the device 100 includes a media capturing element, such as a camera, video and/or audio module, in communication with the controller 108. The media capturing element may be any means for capturing an image, video and/or audio for storage, display or transmission. In an example embodiment in which the media capturing element is a camera module 122, the camera module 122 may include a digital camera capable of forming a digital image file from a captured image. As such, the camera module 122 includes all hardware, such as a lens or other optical component(s), and software for creating a digital image file from a captured image. Alternatively, the camera module 122 may include only the hardware needed to view an image, while a memory device of the device 100 stores instructions for execution by the controller 108 in the form of software to create a digital image file from a captured image. In an example embodiment, the camera module 122 may further include a processing element such as a co-processor, which assists the controller 108 in processing image data and an encoder and/or decoder for compressing and/or decompressing image data. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264, H.264/MPEG-4, MPEG-4, and the like. In some cases, the camera module 122 may provide live image data to the display 116. Moreover, in an example embodiment, the display 116 may be located on one side of the device 100 and the camera module 122 may include a lens positioned on the opposite side of the device 100 with respect to the display 116 to enable the camera module 122 to capture images on one side of the device 100 and present a view of such images to the user positioned on the other side of the device 100.

The device 100 may further include a user identity module (UIM) 124. The UIM 124 may be a memory device having a processor built in. The UIM 124 may include, for example, a subscriber identity module (SIM), a universal integrated circuit card (UICC), a universal subscriber identity module (USIM), a removable user identity module (R-UIM), or any other smart card. The UIM 124 typically stores information elements related to a mobile subscriber. In addition to the UIM 124, the device 100 may be equipped with memory. For example, the device 100 may include volatile memory 126, such as volatile random access memory (RAM) including a cache area for the temporary storage of data. The device 100 may also include other non-volatile memory 128, which may be embedded and/or may be removable. The non-volatile memory 128 may additionally or alternatively comprise an electrically erasable programmable read only memory (EEPROM), flash memory, hard drive, or the like. The memories may store any number of pieces of information, and data, used by the device 100 to implement the functions of the device 100.

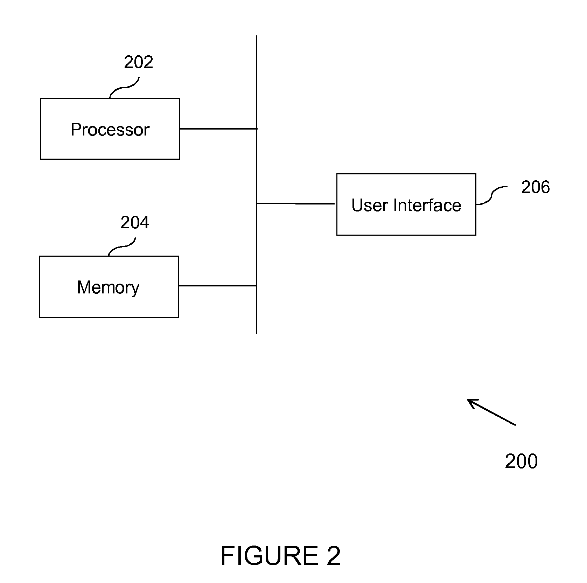

FIGURE 2 illustrates an apparatus 200 for performing emotion detection in accordance with an example embodiment. The apparatus 200 may be employed, for example, in the device 100 of FIGURE 1. However, it should be noted that the apparatus 200, may also be employed on a variety of other devices both mobile and fixed, and therefore, embodiments should not be limited to application on devices such as the device 100 of FIGURE 1. In an example embodiment, the apparatus 200 is a mobile phone, which may be an example of a communication device. Alternatively or additionally, embodiments may be employed on a combination of devices including, for example, those listed above. Accordingly, various embodiments may be embodied wholly at a single device, for example, the device 100 or in a combination of devices. It should be noted that some devices or elements described below may not be mandatory and thus some may be omitted in certain embodiments.

The apparatus 200 includes or otherwise is in communication with at least one processor 202 and at least one memory 204. Examples of the at least one memory 204 include, but are not limited to, volatile and/or non-volatile memories. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 204 may be configured to store information, data, applications, instructions or the like for enabling the apparatus 200 to carry out various functions in accordance with various example embodiments. For example, the memory 204 may be configured to buffer input data for processing by the processor 202. Additionally or alternatively, the memory 204 may be configured to store instructions for execution by the processor 202.

An example of the processor 202 may include the controller 108. The processor 202 may be embodied in a number of different ways. The processor 202 may be embodied as a multi-core processor, a single core processor; or combination of multi-core processors and single core processors. For example, the processor 202 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 204 or otherwise accessible to the processor 202. Alternatively or additionally, the processor 202 may be configured to execute hard coded functionality. As such, whether configured by hardware or software methods, or by a combination thereof, the processor 202 may represent an entity, for example, physically embodied in circuitry, capable of performing operations according to various embodiments while configured accordingly. For example, if the processor 202 is embodied as two or more of an ASIC, FPGA or the like, the processor 202 may be specifically configured hardware for conducting the operations described herein. Alternatively, as another example, if the processor 202 is embodied as an executor of software instructions, the instructions may specifically configure the processor 202 to perform the algorithms and/or operations described herein when the instructions are executed. However, in some cases, the processor 202 may be a processor of a specific device, for example, a mobile terminal or network device adapted for employing embodiments by further configuration of the processor 202 by instructions for performing the algorithms and/or operations described herein. The processor 202 may include, among other things, a clock, an arithmetic logic unit (ALU) and logic gates configured to support operation of the processor 202.

A user interface 206 may be in communication with the processor 202. Examples of the user interface 206 include, but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 206 may include, among other devices or elements, any or all of a speaker, a microphone, a display, and a keyboard, touch screen, or the like. In this regard, for example, the processor 202 may comprise user interface circuitry configured to control at least some functions of one or more elements of the user interface 206, such as, for example, a speaker, ringer, microphone, display, and/or the like. The processor 202 and/or user interface circuitry comprising the processor 202 may be configured to control one or more functions of one or more elements of the user interface 206 through computer program instructions, for example, software and/or firmware, stored on a memory, for example, the at least one memory 204, and/or the like, accessible to the processor 202.

In an example embodiment, the apparatus 200 may include an electronic device. Some examples of the electronic device include communication device, media playing device with communication capabilities, computing devices, and the like. Some examples of the communication device may include a mobile phone, a PDA, and the like. Some examples of computing device may include a laptop, a personal computer, and the like. In an example embodiment, the communication device may include a user interface, for example, the UI 206, having user interface circuitry and user interface software configured to facilitate a user to control at least one function of the communication device through use of a display and further configured to respond to user inputs. In an example embodiment, the communication device may include a display circuitry configured to display at least a portion of the user interface of the communication device. The display and display circuitry may be configured to facilitate the user to control at least one function of the communication device.

In an example embodiment, the communication device may be embodied as to include a transceiver. The transceiver may be any device operating or circuitry operating in accordance with software or otherwise embodied in hardware or a combination of hardware and software. For example, the processor 202 operating under software control, or the processor 202 embodied as an ASIC or FPGA specifically configured to perform the operations described herein, or a combination thereof, thereby configures the apparatus or circuitry to perform the functions of the transceiver. The transceiver may be configured to receive at least one media stream. The media stream may include an audio stream and a video stream associated with the audio stream. For example, during a video call, the audio stream received by the transceiver may be pertaining to a speech data of the user, whereas the video received by the transceiver stream may be pertaining to the video of the facial features and other gestures of the user.

In an example embodiment, the processor 202 is configured to, with the content of the memory 204, and optionally with other components described herein, to cause the apparatus 200 to facilitate detection of an emotional state of a user in the communication device. Examples of the emotional state of the user may include, but are not limited to, 'sad' state, 'angry 'state, 'happy' state, 'disgust' state, 'shock' state, 'surprise' state, 'fear' state, a 'neutral' state. The term 'neutral state' may refer to a state of mind of the user, wherein the user may be in a calm mental state and may not feel overly excited, or overly sad and depressed. In an example embodiment, the emotional states may include those emotional states that may be expressed by means of loud expressions, such as 'angry' emotional state, 'happy' emotional state and the like. Such emotional states that may be expressed by loud expressions are referred to as loudly expressed emotional states. Also, various emotional states may be expressed by subtle expressions, such as 'shy' emotional state, 'disgust' emotional state, 'sad' emotional state, and the like. Such emotional states that are expressed by subtle expressions may be referred to as subtly expressed emotional states. In an example embodiment, the communication device may be a mobile phone. In an example embodiment, the communication device may be equipped with a video calling capability. The communication device may facilitate in detecting the emotional state of the user based on an audio analysis and/or video analysis of the user during the video call.

In an example embodiment, the apparatus 200 may include, or control, or in communication with a database of various samples of speech (or voice) of multiple users. For example, the database may include samples of speech of different users having different genders (such as male and female), users in different emotional states, and users from different geographic regions. In an example embodiment, the database may be stored in the internal memory such as hard drive, random access memory (RAM) of the apparatus 200. Alternatively, the database may be received from external storage medium such as digital versatile disk (DVD), compact disk (CD), flash drive, memory card and the like. In an example embodiment, the apparatus 200 may include the database stored in the memory 204.

In an example embodiment, the database may also include at least one speech element associated with the speech of multiple users. Example of the at least one speech element may include, but are not limited to, a pitch, quality, strength, rate, intonation, strength, and quality of the speech. In an example embodiment, the at least one speech element may be determined by processing an audio stream associated with the user's speech. In an example embodiment, the set of threshold values includes at least one upper threshold limit and at least one lower threshold limit for various users. In an example embodiment, the at least one upper threshold limit is representative of the value of the at least one speech element in an at least one loudly expressed emotional state, such as the 'angry' emotional state and the 'happy' emotional state. In an example embodiment, the at least one lower threshold limit is representative of the value of the at least one speech element in the at least one subtly expressed emotional state, such as the 'disgust' emotional state and the 'sad' emotional state.

In an example embodiment, the at least one threshold limit is determined based on processing of a plurality of input audio streams associated with a plurality of emotional states. The value of the speech element, such as loudness or pitch, associated with 'anger' or 'happiness' is higher than that associated with 'sadness', 'disgust' or any similar emotion. In an example embodiment, the processor 202 is configured to, with the content of the memory 204, and optionally with other components described herein, to cause the apparatus 200 to determine the initial value of the at least one upper threshold limit based on processing of the audio stream during the loudly expressed emotional state, such as the 'happy' emotional state and the 'angry' emotional state. For each of the at least one loudly expressed emotional state, a plurality of values ($X_{li}$) of the at least one speech element associated with the at least one loudly expressed emotional state is determined for a plurality of audio streams. A minimum value ($X_{li\_min}$) of the plurality of values ($X_{li}$) is determined. The at least one upper threshold limit may be determined from the equation:

$$X_u = \sum (X_{lin\_min})/n,$$

where n is the number of the at least one loudly expressed emotional states.

In another example embodiment, the processor 202 is configured to, with the content of the memory 204, and optionally with other components described herein, to cause the apparatus 200 to determine the initial value of the at least one lower threshold limit based on the processing of the audio stream during the subtly expressed emotional state such as the 'sad' emotional state and a 'disgust' emotional state. In an example embodiment, the at least one lower threshold value may be determined by determining, for a plurality of audio streams, a plurality of values ($X_{si}$) of the at least one speech element associated with the at least one subtly expressed emotional state for each of the at least one subtly expressed emotional state. A minimum value ($X_{si\_min}$) of the plurality of values ($X_{si}$) is determined, and the the at least one lower threshold limit $X_l$ may be calculated from the equation:

$$X_l = \sum (X_{sin\_min})/n,$$

where n is the number of the at least one subtly expressed emotional states

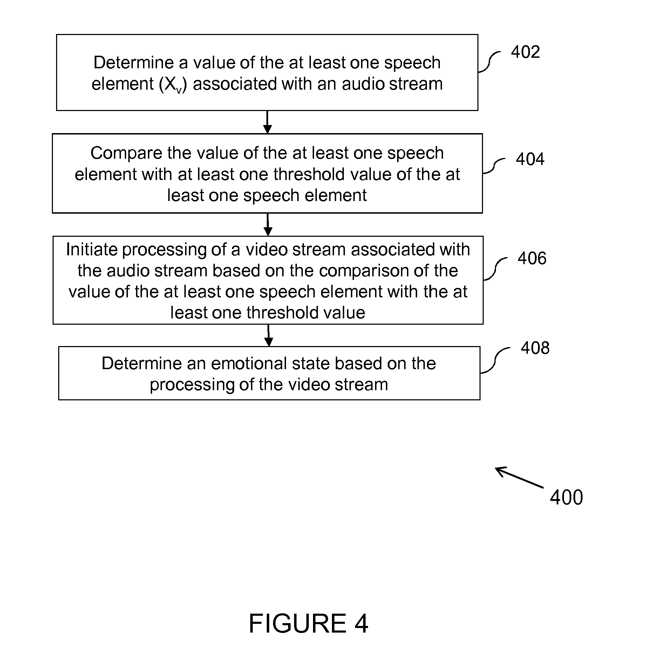

In another example embodiment, the processor 202 is configured to, with the content of the memory 204, and optionally with other components described herein, to cause the apparatus 200 to determine the at least one threshold limit based on processing of a video stream associated with a speech of the user. In the present embodiment, a percentage change in the value of the at least one speech element from at least one emotional state to the neutral state may be determined. The percentage change may be representative of the average percentage change in the value of the at least one speech element during various emotional states, such as during 'happy' or 'angry' emotional states and during 'sad' or 'disgust' emotional states. The percentage change during the 'happy' or 'angry' emotional states may be representative of an upper value of the percentage change, while the percentage change during the 'sad' or 'disgust' emotional states may constitute a lower value of the percentage change in the speech element. The video stream may be processed to determine an approximate current emotional state of the user. The at least one threshold value of the speech element may be determined, based on the approximate current emotional state, the upper value of the percentage change of the speech element and the lower value of the percentage change of the speech element,. The determination of the at least one threshold value based on the processing of the video stream is explained in detail in FIGURE 4.

In an example embodiment, the processor 202 is configured to, with the content of the memory 204, and optionally with other components described herein, to cause the apparatus 200 to determine value of at least one speech element associated with an audio stream. In an example embodiment, the value of the at least one speech element may be determined by monitoring an audio stream. In an example embodiment, the audio stream may be monitored in real-time. For example, the audio stream may be monitored during a call, for example, a video call. The call may facilitate an access of the audio stream and an associated video stream of the user. The audio stream includes a speech of the user, wherein the speech have at least one speech element associated therewith. The video stream includes video presentation of face and/or body of the user, wherein the video presentation may provide the physiological features and facial expressions of the user during the video call. In an example embodiment, the at least one speech element may include one of a pitch, quality, strength, rate, intonation, strength, and quality of the speech. The at least one speech element may be determined by monitoring the audio stream associated with the user's speech. In an example embodiment, a processing means may be configured to determine value of the at least one speech element associated with the audio stream. An example of the processing means may include the processor 202, which may be an example of the controller 108.

In an example embodiment, the processor 202 is configured to, with the content of the memory 204, and optionally with other components described herein, to cause the apparatus 200 to compare the value of the at least one speech element with at least one threshold value of the speech element. According to the invention, at least one threshold value includes at least one upper threshold limit and at least one lower threshold limit. In an example embodiment, a processing means may be configured to compare the value of the at least one speech element with at least one threshold value of the speech element. An example of the processing means may include the processor 202, which may be an example of the controller 108.

In an example embodiment, the processor 202 is configured to, with the content of the memory 204, and optionally with other components described herein, to cause the apparatus 200 to initiate processing of a video stream based on the comparison of the value of the at least one speech element with the at least one threshold value. In an example embodiment, the processing of the video stream may be initiated if the value of the at least one speech element is higher than the upper threshold limit of the speech element. For example, while processing the audio stream of a speech of the user, if it is determined that the value of the speech element 'loudness' has exceeded the upper threshold limit, the processing of the video stream may be initiated. In an example embodiment, processing of the video stream facilitates in determination of the emotional state of the user. For example, if it is determined that the value of the speech element loudness is higher than the initial value of the upper threshold limit, the emotional state may be assumed to be either of the 'happy' emotional state and the 'angry' emotional state. The exact emotional state may be determined based on processing of the video stream. For example, upon processing the video stream, the exact emotional state may be determined to be the 'happy' emotional state. In another example, upon processing the video stream, the exact emotional state may be determined to be the 'angry' emotional state.

In another example embodiment, the processing of the video stream may be initiated if it is determined that the value of the at least one speech element is less than the lower threshold limit of the speech element. For example, while monitoring the audio stream of a speech of the user, if it is determined that the value of the speech element 'loudness' has dropped below the lower threshold limit, the processing of the video stream may be initiated. In an example embodiment, processing of the video stream facilitates in determination of the emotional state of the user. For example, if the value of the speech element loudness is determined to be less than the initial value of the lower threshold limit, the emotional state may be assumed to be either of the 'sad' emotional state and the 'disgust' emotional state. Upon processing of the video stream, the exact emotional state may be determined. For example, upon processing the video stream, the exact emotional state may be determined to be the 'sad' emotional state. Alternatively, upon processing the video stream, the exact emotional state may be determined to be the 'disgust' emotional state. In an example embodiment, a processing means may be configured to determine the at least one threshold limit based on processing of a video stream associated with a speech of the user. An example of the processing means may include the processor 202, which may be an example of the controller 108.

In the present embodiment, the processing of the video stream may be initiated if the value of the speech element is determined to be comparable to the at least one threshold value. The less intensive processing of the audio stream may initially be performed for initial analysis. Based on comparison, if a sudden rise or fall in the value of the at least one speech element associated audio stream is determined, a more intensive analysis of the video stream may be initiated, thereby facilitating reduction in computational intensity, for example, on a low powered embedded device.

In an example embodiment, the processor 202 is configured to, with the content of the memory 204, and optionally with other components described herein, to cause the apparatus 200 to determine an emotional state based on the processing of the video stream. In an example embodiment, the emotional state is determined to be at least one loudly expressed emotional state, for example, the one of the 'angry' state and the 'happy' state, by processing the video stream. In an example embodiment, processing the video stream may include applying facial expression recognition algorithms for determining the exact emotional state of the user. The facial expression recognition algorithms may facilitate in tracking facial features and measurement of facial and other physiological movements for detecting emotional state of the user. For example, in implementing the facial expression recognition algorithms, physiological features may be extracted by processing the video stream. Examples of the physiological characteristics may include, but are not limited to, facial expressions, hand gestures, body movements, head motion and local deformation of facial features such as eyebrows, eyelids, mouth and the like. These and other such features may be used as an input into for classifying the facial features into predetermined categories of the emotional states. In an example embodiment, a processing means may be configured to determine an emotional state based on the processing of the video stream. An example of the processing means may include the processor 202, which may be an example of the controller 108.

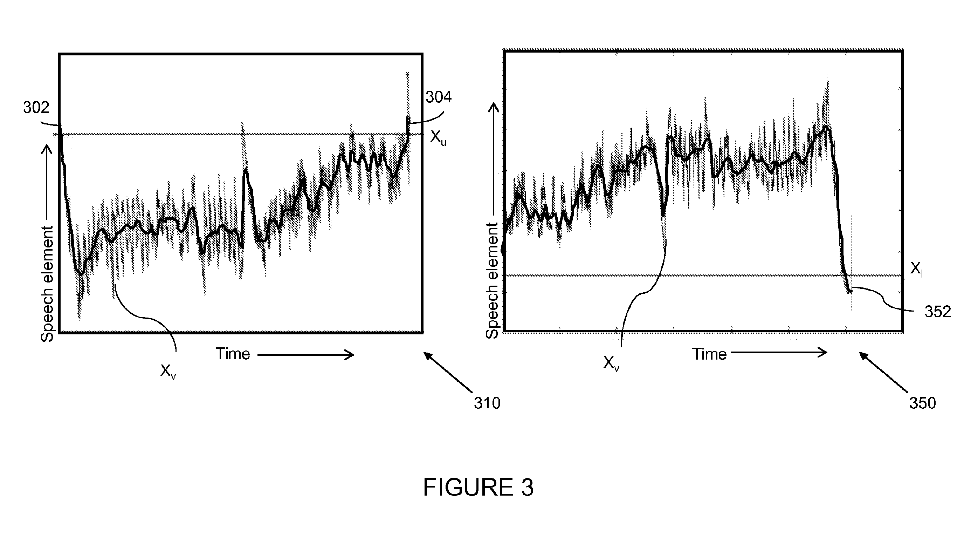

In an example embodiment, the processor 202 is configured to, with the content of the memory 204, and optionally with other components described herein, to cause the apparatus 200 to determine a false detection of the emotional state of the user by comparing the value of the at least one speech element with at least one threshold value of the speech element for a predetermined time period. The false detection of the emotional state is explained in FIGURE 3.

Referring to FIGURE 3, illustrative examples of variation of at least one speech element with time are depicted, in accordance with different example embodiments. FIGURE 3 represents plots, namely a plot 310 and a plot 350 illustrating variation of the at least one speech element with time. For example, the plot 310 illustrates variation of the speech element such as loudness with time, wherein the varying value of the speech element may be depicted as $X_v$, and the upper threshold limit associated with the speech element may be depicted as $X_u$. The upper threshold limit $X_u$ signifies the maximum value of the speech element that may be reached for initiating processing of the video stream. In the example plot 310, the upper value of the threshold limit is shown to be achieved twice, at points marked 302 and 304 on the plot 310.

In an example embodiment, value of the upper threshold limit $X_u$ may be customized such that it is achieved at least once during the predetermined time period for precluding a possibility of a false emotion detection. In an example embodiment, if the value of the at least one speech element is determined to be less than the upper threshold limit for the predetermined time period, the upper threshold limit may be decremented. For example, $X_v$ represent the value of the at least one speech element, $X_u$ represent upper threshold limit of the speech element, and $X_l$ represent the lower threshold limit. If it is determined that $X_v$ does not exceed $X_u$ over the at least one predetermined time period, for example, for N time units, a probability may be indicated that the audio stream being processed may be associated with a feeble voice and may naturally comprise a low value of the speech element. It may also be concluded that the user may not be very loud in expressing his/her 'angry' emotional state and/or 'happy' emotional state. In an example embodiment, $X_u$ may be decremented by a small value, for example, by dx.

Accordingly, $X_u => (X_u - dx)$. In an example embodiment, the process of comparing $X_v$ with $X_u$ for the predetermined time period, and decrementing the value of $X_u$ based on the comparison may be repeated until $X_v$ exceeds $X_u$ at least once. In an example embodiment, a processing means may be configured to decrement the upper threshold limit if the value of the at least one speech element is determined to be less than the upper threshold limit for the predetermined time period. An example of the processing means may include the processor 202, which may be an example of the controller 108.

In an example embodiment, the upper threshold limit ($X_u$) is incremented if the value of the at least one speech element is determined to be higher than the upper threshold limit at least a predetermined number ($M_u$) of times during the predetermined time period. If $X_v$ exceeds $X_u$ too frequently, for example $M_u$ times, during the predetermined time period, for example during N time units, then false detection of the emotional state may be indicated. Also, a probability may be indicated that audio stream being processed may naturally be associated with a high value of the speech element. For example, if X is loudness of the voice, the user may naturally have a loud voice, and the user is assumed to naturally speak in a raised voice. This raised voice may not, however, be considered as an indicative of the 'angry' emotional state or the 'happy' emotional state of the user. In an example embodiment, $X_u$ may be incremented by a small value dx.

Accordingly, $X_u => (X_u + dx)$. This process of comparing values of $X_v$ with $X_u$ for the predetermined time period and incrementing the value of $X_u$ based on the comparison may be repeated until frequency of $X_v$ exceeding $X_u$ drops down below $M_u$ in the predetermined time period. In an example embodiment, a processing means may be configured to increment the upper threshold limit if the value of the at least one speech element is determined to be higher than the upper threshold limit at least a predetermined number of times during the predetermined time period. An example of the processing means may include the processor 202, which may be an example of the controller 108.

The plot 350 illustrates variation of the speech element with time. In an example embodiment, the speech element includes loudness. The plot 350 is shown to include a lower threshold limit $X_l$ of the speech element that may be attained for initiating processing of the video stream. In the example plot 350, the lower threshold limit $X_l$ is shown to be achieved once at the point marked 352 on the plot 350.

In an example embodiment, the at least one lower threshold limit is decremented if the value of the at least one speech element is determined to be higher than the lower threshold value for the predetermined time period. For example, if $X_v$ is determined to be higher than $X_l$ for the predetermined time period, for example for N time units, then a probability may be indicated that the audio stream being processed may naturally be associated with a high value of the speech element. It may also be concluded that the user whose audio stream is being processed may not express the 'sad' emotional state and/or the 'disgust' emotional state as mildly as initially assumed, and may have a voice louder than the assumed normal voice. In such a case, $X_l$ may be incremented by a small value, for example, by dx.

Accordingly, $X_l => (X_l + dx)$. In an example embodiment, the process of comparing $X_v$ with $X_u$ for the predetermined time period, and incrementing the value of $X_l$ based on the comparison may be repeated until $X_v$ drops down $X_u$ at least once. In an example embodiment, a processing means may be configured to decrement the at least one lower threshold limit if the value of the at least one speech element is determined to be higher than the lower value of the at least one threshold value for the predetermined time period. An example of the processing means may include the processor 202, which may be an example of the controller 108.

In an example embodiment, the at least one lower threshold limit is decremented if the value of the at least one speech element is determined to be less than the one lower value of the at least one threshold at least a predetermined number of times during the predetermined time period. If $X_v$ drops below $X_l$ the predetermined number of times, for example, for M times during the predetermined time period (for example, N time units), this may indicate the probability that the audio stream being processed may naturally be associated with a low value of the speech element. For example, if X is loudness of the voice of the user, the user may have a feeble voice, and the user may be considered to naturally speak in a lowered/hushed voice. Accordingly, that may not be considered as an indicative of the 'sad' emotional state or the 'disgust' emotional state of the user. In such a case, $X_u$ may be decremented by a small value dx.

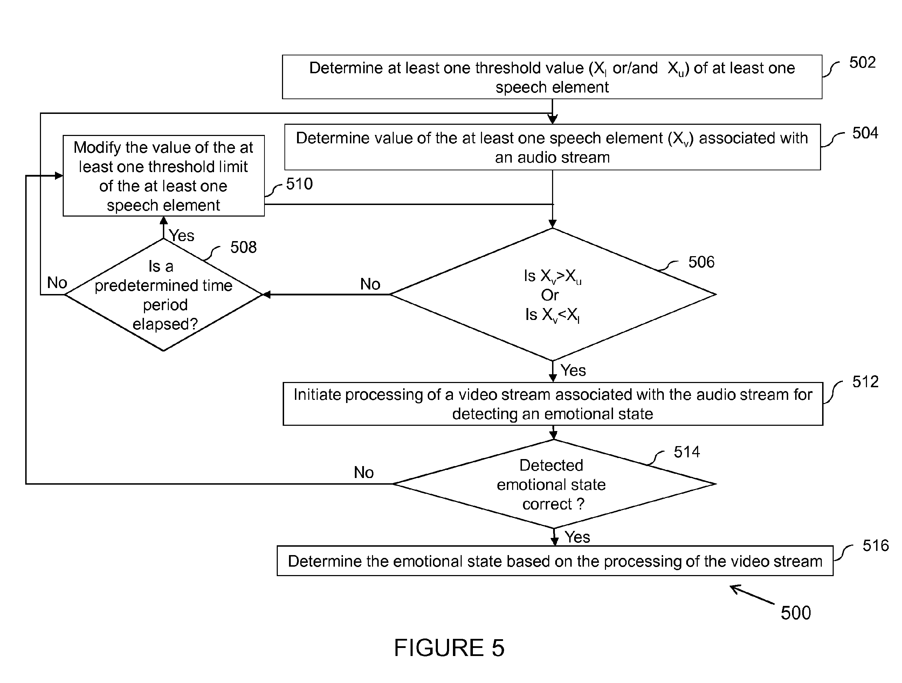

Accordingly, $X_l => (X_l - dx)$. In an example embodiment, this process of comparing values of $X_v$ with $X_l$ for the predetermined time period and decrementing the value of $X_u$ based on the comparison may be repeated until frequency of $X_v$ dropping below $X_u$ drops down below M in the predetermined time period. In an example embodiment, a processing means may be configured to decrement the lower threshold limit is if the value of the at least one speech element is determined to be less than the lower threshold limit at least a predetermined number of times during the predetermined time period. An example of the processing means may include the processor 202, which may be an example of the controller 108. In an example embodiment, the values of the parameters N, $M_u$, $M_l$ may be determined by analysis of the human behavior over a period of time based on analysis of speech samples of the user. The method of facilitating emotion detection is explained in FIGURES 4 and 5.

FIGURE 4 is a flowchart depicting an example method 400 for facilitating emotion detection in electronic devices in accordance with an example embodiment. The method 400 depicted in flow chart may be executed by, for example, the apparatus 200 of FIGURE 2. Examples of the apparatus 200 include, but are not limited to, mobile phones, personal digital assistants (PDAs), laptops, and any equivalent devices.

At block 402, a value of the at least one speech element ($X_v$) associated with an audio stream is determined. Examples of the at least one speech element includes, but are not limited to, pitch, quality, strength, rate, intonation, strength, and quality associated with the audio stream.

At block 404, the value of the at least one speech element is compared with at least one threshold value of the speech element. In an example embodiment, the at least one threshold value includes at least one upper threshold limit and at least one lower threshold limit. In an example embodiment, the at least one threshold value, for example the at least one upper threshold limit and the at least one lower threshold limit, is determined based on processing of a plurality of audio streams associated with a plurality of emotional states, for example, 'happy', 'angry', 'sad', 'disgust' emotional states. In another example embodiment, the at least one threshold value is determined by computing a percentage change in the value of at least one speech element associated with the audio stream from at least one emotional state to a neutral emotional state. The video stream is processed to determine value of the at least one speech element at a current emotional state, and an initial value of the at least one threshold value is determined based on the value of the at least one speech element at the current emotional state, and the computed percentage change in the value of at least one speech element.

At block 406, a video stream is processed based on the comparison of the value of the at least one speech element with the at least one threshold value. In an example embodiment, the processing of the video stream may be initiated if the value of the at least one speech element is determined to be higher than the at least one upper threshold limit. In an alternative embodiment, the processing of the video stream is initiated if the value of the at least one speech element is determined to be less than the at least one lower threshold limit. In an example embodiment, the comparison of the value of the at least one speech element with the at least one threshold value is performed for a predetermined time period.

At block 408, an emotional state is determined based on the processing of the video stream. In an example embodiment, the processing of the video stream may be performed by face recognition algorithms.

In an example embodiment, a processing means may be configured to perform some or all of: determining value of at least one speech element associated with an audio stream; comparing the value of the at least one speech element with at least one threshold value of a set of threshold values of the speech element; processing a video stream based on the comparison of the value of the at least one speech element with the at least one threshold value, the video stream being associated with the audio stream; and determining an emotional state based on the processing of the video stream. An example of the processing means may include the processor 202, which may be an example of the controller 108.

FIGURE 5 is a flowchart depicting an example method 500 for facilitating emotion detection in electronic devices in accordance with another example embodiment. The method 500 depicted in flow chart may be executed by, for example, the apparatus 200 of FIGURE 2.

Operations of the flowchart, and combinations of operation in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. These computer program instructions may also be stored in a computer-readable storage memory (as opposed to a transmission medium such as a carrier wave or electromagnetic signal) that may direct a computer or other programmable apparatus to function in a particular manner, such that the instructions stored in the computer-readable memory produce an article of manufacture the execution of which implements the operations specified in the flowchart. The computer program instructions may also be loaded onto a computer or other programmable apparatus to cause a series of operations to be performed on the computer or other programmable apparatus to produce a computer-implemented process such that the instructions, which execute on the computer or other programmable apparatus provide operations for implementing the operations in the flowchart. The operations of the method 500 are described with help of apparatus 200. However, the operations of the method 500 can be described and/or practiced by using any other apparatus.

In an example embodiment, a database of a plurality of speech samples (or audio streams) may be created. The audio streams may have at least one speech element associated therewith. For example, the audio stream may have loudness associated therewith. Other examples of the at least one speech element may include but are not limited to pitch, quality, strength, rate, intonation, strength, quality or a combination thereof.

At block 502, at least one threshold value of at least one speech element may be determined. The at least one threshold value of the speech element may include at least one upper threshold limit and at least one lower threshold limit. It will be understood that for various types of speech elements, there may be at least one upper threshold limit and at least one lower threshold limit. Moreover, for each of a male voice and a female voice, the values of the at least one upper and lower threshold limits associated with different speech elements thereof may vary.

In an example embodiment, the at least one threshold limit may be determined based on processing of a plurality of input audio streams associated with a plurality of emotional states. In an example embodiment, the plurality of input audio stream may be processed over a period of time and a database may be generated for storing the values of at least one speech element associated with various types of emotional states.

In an example embodiment, at least one upper threshold limit and the at least one lower threshold limit associated with various speech elements of the input audio stream may be determined. In an example embodiment, a processing means may determine at least one upper threshold limit and the at least one lower threshold limit. An example of the processing means may include the processor 202, which may be an example of the controller 108. In an example embodiment, an initial value of the upper threshold limit may be considered for at least one loudly expressed emotional state. For example, for the speech element loudness, an initial value of the upper threshold limit may be determined by considering the 'angry' emotional state and the 'happy' emotional state. For each of the at least one loudly expressed emotional state, a plurality of values ($X_{lj}$) of the at least one speech element associated with the at least one loudly expressed emotional state for a plurality of audio streams determined. The value of the speech element for the 'n' male voice samples in the 'angry' emotional states may be $X_{alm1}, X_{alm2}, X_{alm3}, .. X_{almn}$. Also, for the 'happy' emotional state, the value of the speech element for the 'n' male voice samples may be $X_{hlm1}, X_{hlm2}, X_{hlm3}, ... X_{hlmn}$. Similarly, the value of the speech element for the 'n' for female voice samples for 'angry' emotional state may be $X_{alf1}, X_{alf2}, X_{alf3}, ... X_{alfn}$ and for 'happy' emotional state may be $X_{hlf1}, X_{hllf2}, X_{hlf3}, ... X_{hlfn}$.

For a male voice, a minimum value of the speech element among the 'n' voice samples of the male voice in the 'angry' emotional state may be considered for determining the upper threshold limit of the speech element corresponding to the 'angry' emotional state. Also, a minimum value of the speech element among the 'n' voice samples of the male voice in the 'happy' emotional state may be considered for determining the upper threshold limit of the speech element corresponding to the 'happy' emotional state. The initial value of the upper threshold limit for the male voice may be determined as:

$$X_{mu} = (X_{alm\text{-}min} + X_{hlm\text{-}min})/2;$$

where,

$$X_{lam\text{-}min} = min(X_{alm1}, X_{alm2}, X_{alm3}, ... X_{almn});$$

and

$$X_{hlm\text{-}min} = min(X_{hlm1}, X_{hlm2}, X_{hlm3}, ... X_{hlmn})$$

In a similar manner, the value of the upper threshold limit for the female voice may be determined as:

$$X_{flu} = (X_{alf\text{-}min} + X_{hlf\text{-}min})/2;$$

where,

$$X_{alf\text{-}min} = min(X_{alf1}, X_{alf2}, X_{alf3}, \ldots X_{alfn});$$

and

$$X_{hlf\text{-}min} = min(X_{hlf1}, X_{hlf2}, X_{hlf3}, \ldots X_{hlfn})$$

In an example embodiment, the lower threshold limit for the speech element loudness may be determined by determining, for a plurality of audio streams, a plurality of values ($X_{si}$) of the at least one speech element associated with the at least one subtly expressed emotional state. Examples of the at least one subtly expressed emotional state may include the 'sad' emotional state and the 'disgust' emotional state. Considering the value of the speech element for the 'n' male voice samples in the 'sad' emotional states as $X_{ssm1}, X_{ssm2}, X_{ssm3}, \ldots X_{ssmn}$. Also, for the 'disgust' emotional state, the value of the speech element for the 'n' male voice samples may be $X_{dsm1}, X_{dsm2}, X_{dsm3}, \ldots X_{dsmn}$. The values of the speech element for female voice samples corresponding to 'angry' emotional state may be $X_{ssf1}, X_{ssf2}, X_{ssf3}, \ldots X_{ssfn}$, and for 'happy' emotional state may be $X_{dsf1}, X_{dsf2}, X_{dsf3}, \ldots X_{dsfn}$.

For a male voice, a minimum value ($X_{ssi\_mi}$) of the speech element among the 'n' voice samples of the male voice in the 'sad' emotional state may be considered for determining the lower threshold limit of the speech element corresponding to the 'sad' emotional state. Also, a minimum value ($X_{dsi\_min}$) of the speech element among the 'n' voice samples of the male voice in the 'disgust' emotional state may be considered for determining the lower threshold limit of the speech element corresponding to the 'disgust' emotional state. Similarly, for a female voice, the a minimum value of the speech element among the 'n' voice samples of the female voice in the 'sad' emotional states and the 'disgust' emotional states may be considered for determining the upper threshold limit of the speech element corresponding to the 'sad'/'disgust' emotional states. The initial value of the lower threshold limit for the male voice may be determined as:

$$X_{ml} = (X_{ssm\text{-}min} + X_{dsm\text{-}min})/2;$$

where,

$$X_{sm\text{-}min} = min(X_{ssm1}, X_{ssm2}, X_{ssm3}, \ldots X_{ssmn});$$

and

$$X_{dsm\text{-}min} = min(X_{hsm1}, X_{hsm2}, X_{hsm3}, \ldots X_{hsmn})$$

In a similar manner, the value of the lower threshold limit for the female voice may be determined as:

$$X_{fl} = (X_{sf\text{-}min} + X_{df\text{-}min})/2;$$

where,

$$X_{ssf\text{-}min} = min(X_{ssf1}, X_{ssf2}, X_{ssf3}, \ldots X_{ssfn});$$

and

$$X_{df\text{-}min} = min(X_{dsf1}, X_{dsf2}, X_{dsf3}, \ldots X_{dsfn})$$

In another example embodiment, the initial value of the at least one threshold limit is determined by processing a video stream. In an example embodiment, the video stream may be processed in real-time. For example, the video stream associated with a voice, for example a male voice may be processed during a call, for example, a video call, a video conferencing, video players, and the like. In the present embodiment, the at least one upper value of the threshold limit for the male voice may be determined by computing a percentage change in the value of at least one speech element associated with the audio stream from the at least one emotional state to that at the neutral emotional state. For example, from the database, an average percentage change of the at least one speech element, for example loudness, is determined during at least one emotional state, such as 'angry' and/or 'happy' emotional state, and compared with the value of the speech element at the neutral emotional state to determine a higher value of the average percentage change in the value of the speech element. Also, an average percentage change of the at least one speech element, may be determined during at least one emotional state, such as the 'sad' and/or the 'disgust' emotional state, and compared with the value of the speech element at the neutral emotional state to determine a lower value of the average percentage change in the value of the speech element.

Upon determining the upper and the lower value of the average percentage change in the speech element, a video stream associated with a user, for example a male user, may be processed for determining an approximate emotional state of the user. At the approximate emotional state of the user, a current value of the speech element ($X_c$) may be determined.

In an example embodiment, based on the processing of the video stream, the approximate emotional state of the user may be determined to be a neutral emotional state. The current value of the speech element, $X_c$ may be determined to be the value of the speech element associated with the neutral emotional state of the user. In this case, the upper threshold limit and the lower threshold limit may be computed as:

$$X_{mu} = X_c * [1 + (X_{mu}/100)];$$

and

$$X_{ml} = X_c * [1 + (X_{ml}/100)]$$

In an example embodiment, based on the processing of the video stream, the approximate emotional state of the user may be determined to be an 'angry' or 'happy' emotional state. The current value of the speech element, $X_c$ may be determined to be the value of the speech element associated with the 'angry'/'happy' emotional state of the user. In this case, the upper threshold limit and the lower threshold limit may be computed as:

$$X_{mu} = X_c;$$

and

$$X_{ml} = X_c * [1 - (X_{mu}/100)] * [1 + (X_{ml}/100)]$$

In an example embodiment, based on the processing of the video stream, the approximate emotional state of the user may be determined to be a 'sad' emotional state or a 'disgust' emotional state. The current value of the speech element, $X_c$ may be determined to be the value of the speech element associated with the 'sad'/'disgust' emotional state of the user. In this case, the upper threshold limit and the lower threshold limit may be computed as:

$$X_{mu} = X_c * [1 - (X_{ml}/100)] * [1 + (X_{mu}/100)];$$

and

$$X_{ml} = X_c$$

In the present embodiment, the upper threshold limit and the lower threshold limit are shown to be computed for a male user or a male voice. However, it will be understood that the upper threshold limit and the lower threshold limit for a female voice may be computed in a similar manner.

According to the invention, an audio stream and an associated video stream are received.

In an example embodiment, the audio stream and the associated video stream may be received at the apparatus 200, which may be a communication device. In an example embodiment, a receiving means may receive the audio stream and the video stream associated with the audio stream. An example of the receiving means may include a transceiver, such as the transceiver 208 of the apparatus 200. At block 504, the audio stream may be processed for determining value of at least one speech element associated with the audio stream. In an example embodiment, the processed value of the audio stream may vary with time. The value of the speech element $X_v$ associated with the audio stream may vary with time, as illustrated in FIGURE 3.

At block 506, it is determined whether the processed value $X_v$ of the speech element is comparable to the at least one threshold value. In other words, it may be determined whether the processed value of the speech element $X_v$ is higher than the upper threshold limit, or the processed value of the speech element $X_v$ is less than the lower threshold limit. If the processed value $X_v$ of the speech element is not determined to be the higher than the upper threshold limit or less than the lower threshold, it is determined at block 508 whether or not the predetermined time period has elapsed during which the modified value of the speech element has remained substantially same.

If it may be determined that during the predetermined time period, the processed value $X_v$ of the speech element has remained within the threshold limits, then the values of the at least one speech element may be modified at block 510.

For example, if the processed value $X_v$ of the at least one speech element is determined to be less than the upper threshold limit $X_u$ for the predetermined time period, the upper threshold limit may be decremented by a small value dx. In an example embodiment, the process of comparing $X_v$ with $X_u$ for the predetermined time period, and decrementing the value of $X_u$ based on the comparison may be repeated until $X_v$ exceeds $X_u$ at least once. In another example embodiment, if the processed value $X_v$ of the at least one speech element is determined to be higher than lower threshold limit for the predetermined time period, the lower threshold limit $X_l$ may be incremented by a small value dx. In such a case, a probability may be indicated that the audio stream being processed may naturally be associated with a high value of the speech element. It may also be concluded that the user whose audio stream is being processed may not express the 'sad' emotional state and/or the 'disgust' emotional state as mildly as initially assumed, and may have a voice louder than the assumed normal voice. In an example embodiment, the process of comparing $X_v$ with $X_u$ for the predetermined time period, and incrementing the value of $X_l$ based on the comparison may be repeated until $X_v$ drops down $X_u$ at least once.

In yet another example embodiment, the value of the upper threshold limit may be incremented by a small value dx if the processed value $X_v$ of the speech element is determined to be higher than the upper threshold limit at least a predetermined number ($M_u$) of times during the predetermined time period. In an example embodiment, the process of comparing values of $X_v$ with $X_u$ for the predetermined time period and incrementing the value of $X_u$ based on the comparison may be repeated until frequency of $X_v$ exceeding $X_u$ drops down below the predetermined number of times in the predetermined time period.

In still another example embodiment, the lower value of the threshold limit may be decremented by a small value dx if the value of the speech element being is determined to be less than the lower threshold limit by at least a predetermined number of times during the predetermined time period. In an example embodiment, this process of comparing values of $X_v$ with $X_l$ for the predetermined time period and decrementing the value of $X_u$ based on the comparison may be repeated until frequency of $X_v$ dropping below $X_u$ drops down below the predetermined number of times in the predetermined time period. In an example embodiment, the values of the parameters N, $M_u$, $M_l$ may be determined by analysis of the human behavior over a period of time.

If it is determined at block 508 that the predetermined period is not elapsed, the audio stream may be processed for determining the value of at least one speech element at block 404.

If it is determined at block 506 that the processed value of the speech element $X_v$ is higher than the upper threshold limit, or the processed value of the speech element $X_v$ is less than the lower threshold limit, a video stream associated with the audio stream may be processed for detecting an emotional state at block 512. For example, based on the comparison of the processed value of the speech element with the at least one threshold limit, the emotional state may be detected to be one of the 'happy' and the "angry'emotional state. The video stream may be processed for detecting the exact emotional state out of the 'happy' and the 'angry' emotional state. At block 514, it may be determined whether or not the detected emotional state is correct. If a false detection of the emotional state is determined at block 514, then the value of the at least one threshold limit may be modified at block 510, and the value of the at least one speech element may be compared with the modified threshold value at block 506. However, if it is determined at block 514 that the detected emotional state is correct, the detected emotional state may be presented to the user at block 516. It will be understood that although the method 500 of FIGURE 5 shows a particular order, the order need not be limited to the order shown, and more or fewer blocks may be executed, without providing substantial change to the scope of the present disclosure.

Without in any way limiting the scope, interpretation, or application of the claims appearing below, a technical effect of one or more of the example embodiments disclosed herein is to facilitate emotion detection in electronic devices. The audio stream associated with an operation, for example a call, may be processed and speech element associated with the audio stream may be compared with predetermined threshold values for detecting a change in the emotional state of the user, for example a caller. The process is further refined to determine an exact emotional state by performing an analysis of a video stream associated with the audio stream. Various embodiments reduce the computation complexity of the electronic device since a computationally intensive video analysis is performed if approximate emotional state of the user is determined during a less intensive audio analysis. Various embodiments are suitable for a resource constrained or low powered embedded devices such as a mobile phone. Moreover, the predetermined threshold limits of the speech element are self-learning, and may continuously be re-adjusted based on the characteristics the specimen of the human voice under consideration.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 1 and/or 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present disclosure as defined in the appended claims.

**Claims**

1. A method comprising:

    receiving an audio stream and a video stream associated with the audio stream, wherein the audio stream includes speech of a user and wherein the video stream includes video presentation of a face and/or a body of the user;
    determining a value of at least one speech element associated with the audio stream;
    comparing the value of the at least one speech element with at least one threshold value of the speech element, wherein the at least one threshold value of the speech element includes at least one upper threshold limit and at least one lower threshold limit;
    in response to said value being higher than said at least one upper threshold limit or said value being less than said at least one lower threshold limit, initiating processing of the video stream for determination of an emotional state of the user, and determining the emotional state based on the processing of the video stream.

2. The method of claim 1, wherein the at least one upper threshold limit is representative of the value of the at least one speech element in at least one loudly expressed emotional state, wherein a loudly expressed emotional state is an emotional state that is expressed by loud expressions, and the at least one lower threshold limit is representative of the value of the at least one speech element in at least one subtly expressed emotional state, wherein a subtly expressed emotional state is an emotional state that is expressed by subtle expressions.

3. The method of claim 2, wherein the at least one upper threshold value is determined by: performing for the at least one loudly expressed emotional state:

    determining, for a plurality of audio streams, a plurality of values ($X_{li}$) of the at least one speech element associated with the at least one loudly expressed emotional state; and

determining a minimum value ($X_{li\_min}$) of the plurality of values ($X_{li}$); and calculating the at least one upper threshold limit ($X_u$) from the equation:

$$X_u = \Sigma(X_{lin\_min})/n, \text{ where n is the number of the at least one loudly expressed emotional states.}$$

4. The method of claim 2, wherein the at least one lower threshold value is determined by:

performing for the at least one subtly expressed emotional state:

determining, for a plurality of audio streams, a plurality of values ($X_{si}$) of the at least one speech element associated with the at least one subtly expressed emotional state; and

determining a minimum value ($X_{si\_min}$) of the plurality of values ($X_{si}$); and calculating the at least one lower threshold limit ($X_l$) from the equation:

$$X_l = \Sigma(X_{sin\_min})/n, \text{ where n is the number of the at least one subtly expressed emotional states.}$$

5. The method of claim 2 or 3, wherein the processing of the video stream is initiated if the value of the at least one speech element is determined to be higher than the at least one upper threshold limit.

6. The method of claim 2 or 4, wherein the processing of the video stream is initiated if the value of the at least one speech element is determined to be less than the at least one lower threshold limit.

7. The method of claim 2, wherein the comparison of the value of the at least one speech element with the at least one threshold value is performed for a predetermined time period.

8. The method of claim 7 further comprising decrementing the at least one upper threshold limit if the value of the at least one speech element is determined to be less than the at least one upper value threshold limit for the predetermined time period.

9. The method of claim 7 further comprising incrementing the at least one lower threshold limit if the value of the at least one speech element is determined to be higher than the lower threshold limit for the predetermined time period.

10. The method of claim 7 further comprising incrementing the at least one upper threshold limit if the value of the at least one speech element is determined to be higher than the upper threshold limit at least a predetermined number of times during the predetermined time period.

11. The method of claim 7 further comprising decrementing the at least one lower threshold limit if the value of the at least one speech element is determined to be less than the lower threshold limit at least a predetermined number of times during the predetermined time period.

12. The method of claim 1, wherein the at least one threshold value is determined by performing:

computing a percentage change in the value of at least one speech element associated with the audio stream from at least one emotional state to a neutral emotional state;

monitoring the video stream to determine a current emotional state of the user;

determining value of the at least one speech element at the current emotional state; and

determining an initial value of the at least one upper threshold limit and the at least one lower threshold limit based on the value of the at least one speech element at the current emotional state, and the computed percentage change in the value of at least one speech element.

13. The method of claim 1, wherein the at least one speech element comprises at least one of pitch, quality, strength, rate, intonation, strength, or quality associated with the audio stream.

14. An apparatus comprising means configured at least to perform a method as claimed in at least one of claims 1 - 13.

15. A computer program comprising program instructions which are adapted to cause, when executed by an apparatus the apparatus at least to perform a method as claimed in at least one of claims 1 - 13.

**Patentansprüche**

1. Verfahren, umfassend:

   Empfangen eines Audiostroms und eines dem Audiostrom zugeordneten Videostroms, wobei der Audiostrom Sprache eines Benutzers umfasst und wobei der Videostrom eine Videopräsentation eines Gesichts und/oder eines Körpers des Benutzers umfasst;
   Bestimmen eines Werts mindestens eines dem Audiostrom zugeordneten Sprachelements;
   Vergleichen des Werts des mindestens einen Sprachelements mit mindestens einem Schwellenwert des Sprachelements, wobei der mindestens eine Schwellenwert des Sprachelements mindestens eine obere Schwellengrenze und mindestens eine untere Schwellengrenze umfasst;
   Einleiten von Verarbeitung des Videostroms zur Bestimmung eines emotionalen Zustands des Benutzers und Bestimmen des emotionalen Zustands auf der Basis der Verarbeitung des Videostroms, wenn der Wert höher als die mindestens eine obere Schwellengrenze ist oder der Wert kleiner als die mindestens eine untere Schwellengrenze ist.

2. Verfahren nach Anspruch 1, wobei
   die mindestens eine obere Schwellengrenze den Wert des mindestens einen Sprachelements in mindestens einem laut ausgedrückten emotionalen Zustand repräsentiert, wobei ein laut ausgedrückter emotionaler Zustand ein emotionaler Zustand ist, der durch laute Ausdrücke ausgedrückt wird, und
   die mindestens eine untere Schwellengrenze den Wert des mindestens einen Sprachelements in mindestens einem unterschwellig ausgedrückten emotionalen Zustand repräsentiert, wobei ein unterschwellig ausgedrückter emotionaler Zustand ein emotionaler Zustand ist, der durch unterschwellige Ausdrücke ausgedrückt wird.

3. Verfahren nach Anspruch 2, wobei der mindestens eine obere Schwellenwert bestimmt wird, indem für den mindestens einen laut ausgedrückten emotionalen Zustand Folgendes durchgeführt wird:

   Bestimmen mehrerer Werte ($X_{li}$) des mindestens einen Sprachelements, die dem mindestens einen laut ausgedrückten emotionalen Zustand zugeordnet sind, für mehrere Audioströme; und
   Bestimmen eines Mindestwerts ($X_{li\_min}$) der mehreren Werte ($X_{li}$); und
   Berechnen der mindestens einen oberen Schwellengrenze ($X_u$) aus der Gleichung $X_u=\Sigma(X_{li\_min})$ wobei n die Anzahl des mindestens einen laut ausgedrückten emotionalen Zustands ist.

4. Verfahren nach Anspruch 2, wobei der mindestens eine untere Schwellenwert bestimmt wird, indem für den mindestens einen unterschwellig ausgedrückten emotionalen Zustand Folgendes durchgeführt wird:

   Bestimmen mehrerer Werte ($X_{si}$) des mindestens einen Sprachelements, die dem mindestens einen unterschwellig ausgedrückten emotionalen Zustand zugeordnet sind, für mehrere Audioströme; und
   Bestimmen eines Mindestwerts ($X_{si\_min}$) der mehreren Werte ($X_{si}$); und
   Berechnen der mindestens einen unteren Schwellengrenze ($X_l$) aus der Gleichung $X_l=\Sigma(X_{sin\_min})/n$, wobei n die Anzahl des mindestens einen unterschwellig ausgedrückten emotionalen Zustands ist.

5. Verfahren nach Anspruch 2 oder 3, wobei das Verarbeiten des Videostroms eingeleitet wird, wenn bestimmt wird, dass der Wert des mindestens einen Sprachelements höher als die mindestens eine obere Schwellengrenze ist.

6. Verfahren nach Anspruch 2 oder 4, wobei das Verarbeiten des Videostroms eingeleitet wird, wenn bestimmt wird, dass der Wert des mindestens einen Sprachelements kleiner als die mindestens eine untere Schwellengrenze ist.

7. Verfahren nach Anspruch 2, wobei der Vergleich des Werts des mindestens einen Sprachelements mit dem mindestens einen Schwellenwert für einen vorbestimmten Zeitraum durchgeführt wird.

8. Verfahren nach Anspruch 7, das ferner Dekrementieren der mindestens einen oberen Schwellengrenze umfasst, wenn bestimmt wird, dass der Wert des mindestens einen Sprachelements für den vorbestimmten Zeitraum kleiner als die mindestens eine obere Wertschwellengrenze ist.

9. Verfahren nach Anspruch 7, das ferner Inkrementieren der mindestens einen unteren Schwellengrenze umfasst, wenn bestimmt wird, dass der Wert des mindestens einen Sprachelements für den vorbestimmten Zeitraum höher als die untere Schwellengrenze ist.

**10.** Verfahren nach Anspruch 7, das ferner Inkrementieren der mindestens einen oberen Schwellengrenze umfasst, wenn bestimmt wird, dass der Wert des mindestens einen Sprachelements während des vorbestimmten Zeitraums mindestens eine vorbestimmte Anzahl von Malen höher als die obere Schwellengrenze ist.

**11.** Verfahren nach Anspruch 7, das ferner Dekrementieren der mindestens einen unteren Schwellengrenze umfasst, wenn bestimmt wird, dass der Wert des mindestens einen Sprachelements während des vorbestimmten Zeitraums mindestens eine vorbestimmte Anzahl von Malen kleiner als die untere Schwellengrenze ist.

**12.** Verfahren nach Anspruch 1, wobei der mindestens eine Schwellenwert bestimmt wird, indem Folgendes durchgeführt wird:

Berechnen einer prozentualen Änderung des Werts mindestens eines dem Audiostrom zugeordneten Sprachelements von mindestens einem emotionalen Zustand zu einem neutralen emotionalen Zustand;
Überwachen des Videostroms, um einen derzeitigen emotionalen Zustand des Benutzers zu bestimmen;
Bestimmen des Werts des mindestens einen Sprachelements in dem derzeitigen emotionalen Zustand; und
Bestimmen eines Anfangswerts der mindestens einen oberen Schwellengrenze und der mindestens einen unteren Schwellengrenze auf der Basis des Werts des mindestens einen Sprachelements in dem derzeitigen emotionalen Zustand und der berechneten prozentualen Änderung des Werts des mindestens einen Sprachelements.

**13.** Verfahren nach Anspruch 1, wobei das mindestens eine Sprachelement mindestens eines von Tonhöhe, Qualität, Stärke, Rate, Sprachmelodie, Stärke oder dem Audiostrom zugeordnete Qualität umfasst.

**14.** Vorrichtung, die Mittel umfasst, die dafür ausgelegt sind, mindestens ein Verfahren nach mindestens einem der Ansprüche 1-13 auszuführen.

**15.** Computerprogramm, das Programmanweisungen umfasst, die dafür ausgelegt sind, bei Ausführung durch eine Vorrichtung zu Bewirken, dass die Vorrichtung ein Verfahren nach mindestens einem der Ansprüche 1-13 ausführt.

**Revendications**

**1.** Procédé comprenant :

la réception d'un flux de données audio et d'un flux de données vidéo associé au flux de données audio, le flux de données audio comprenant le discours d'un utilisateur et le flux de données vidéo comprenant une présentation vidéo du visage et/ou du corps de l'utilisateur ;
la détermination d'une valeur d'au moins un élément de discours associé au flux de données audio ;
la comparaison de la valeur de l'au moins un élément de discours avec au moins une valeur de seuil de l'élément de discours, l'au moins une valeur de seuil de l'élément de discours comprenant au moins une limite de seuil supérieure et au moins une limite de seuil inférieure ;
en réponse à ladite valeur qui est supérieure à ladite au moins une limite de seuil supérieure ou à ladite valeur qui est inférieure à ladite au moins une limite de seuil inférieure, l'initiation d'un traitement du flux de données vidéo pour la détermination d'un état émotionnel de l'utilisateur, et la détermination de l'état émotionnel sur la base du traitement du flux de données vidéo.

**2.** Procédé selon la revendication 1, dans lequel l'au moins une limite de seuil supérieure est représentative de la valeur de l'au moins un élément de discours dans au moins un état émotionnel exprimé fortement, un état émotionnel exprimé fortement étant un état émotionnel qui est exprimé par des expressions fortes, et
l'au moins une limite de seuil inférieure est représentative de la valeur de l'au moins un élément de discours dans au moins un état émotionnel exprimé subtilement, un état émotionnel exprimé subtilement étant un état émotionnel qui est exprimé par des expressions subtiles.

**3.** Procédé selon la revendication 2, dans lequel l'au moins une valeur de seuil supérieure est déterminée par :

la mise en oeuvre, pour l'au moins un état émotionnel exprimé fortement :

d'une détermination, pour une pluralité de flux de données audio, d'une pluralité de valeurs ($X_{li}$) de l'au

moins un élément de discours associé à l'au moins un état émotionnel exprimé fortement ; et
d'une détermination d'une valeur minimale ($X_{li\_min}$) parmi la pluralité de valeurs ($X_{li}$) ; et

le calcul de l'au moins une limite de seuil supérieure ($X_u$) à partir de l'équation :

$X_u = \Sigma(X_{lin\_min})/n$ où n est le nombre de l'au moins un état émotionnel exprimé fortement.

4. Procédé selon la revendication 2, dans lequel l'au moins une valeur de seuil inférieure est déterminée par :

la mise en oeuvre, pour l'au moins un état émotionnel exprimé subtilement :

d'une détermination, pour une pluralité de flux de données audio, d'une pluralité de valeurs ($X_{si}$) de l'au moins un élément de discours associé à l'au moins un état émotionnel exprimé subtilement ; et
d'une détermination d'une valeur minimale ($X_{si\_min}$) parmi la pluralité de valeurs ($X_{si}$); et

le calcul de l'au moins une limite de seuil inférieure ($X_l$) à partir de l'équation :

$X_l = \Sigma(X_{sin\_min})/n$ où n est le nombre de l'au moins un état émotionnel exprimé subtilement.

5. Procédé selon la revendication 2 ou 3, dans lequel le traitement du flux de données vidéo est initié si la valeur de l'au moins un élément de discours est déterminée être supérieure à l'au moins une limite de seuil supérieure.

6. Procédé selon la revendication 2 ou 4, dans lequel le traitement du flux de données vidéo est initié si la valeur de l'au moins un élément de discours est déterminée être inférieure à l'au moins une limite de seuil inférieure.

7. Procédé selon la revendication 2, dans lequel la comparaison de la valeur de l'au moins un élément de discours avec l'au moins une valeur de seuil est effectuée pendant une période de temps prédéterminée.

8. Procédé selon la revendication 7, comprenant en outre la décrémentation de l'au moins une limite de seuil supérieure si la valeur de l'au moins un élément de discours est déterminée être inférieure à l'au moins une limite de seuil de valeur supérieure pour la période de temps prédéterminée.

9. Procédé selon la revendication 7, comprenant en outre l'incrémentation de l'au moins une limite de seuil inférieure si la valeur de l'au moins un élément de discours est déterminée être supérieure à la limite de seuil inférieure pour la période de temps prédéterminée.

10. Procédé selon la revendication 7, comprenant en outre l'incrémentation de l'au moins une limite de seuil supérieure si la valeur de l'au moins un élément de discours est déterminée être supérieure à la limite de seuil supérieure au moins un nombre prédéterminé de fois durant la période de temps prédéterminée.

11. Procédé selon la revendication 7, comprenant en outre la décrémentation de l'au moins une limite de seuil inférieure si la valeur de l'au moins un élément de discours est déterminée être inférieure à la limite de seuil inférieure au moins un nombre prédéterminé de fois durant la période de temps prédéterminée.

12. Procédé selon la revendication 1, dans lequel l'au moins une valeur de seuil est déterminée par mise en oeuvre :

d'un calcul d'un changement de pourcentage dans la valeur d'au moins un élément de discours associé au flux de données audio entre au moins un état émotionnel et un état émotionnel neutre ;
d'une surveillance du flux de données vidéo pour déterminer un état émotionnel en cours de l'utilisateur ;
d'une détermination de la valeur de l'au moins un élément de discours dans l'état émotionnel en cours ; et
d'une détermination d'une valeur initiale de l'au moins une limite de seuil supérieure et de l'au moins une limite de seuil inférieure sur la base de la valeur de l'au moins un élément de discours dans l'état émotionnel en cours, et du changement de pourcentage calculé de la valeur d'au moins un élément de discours.

13. Procédé selon la revendication 1, dans lequel l'au moins un élément de discours comprend au moins l'un parmi la hauteur tonale, la qualité, la force, la vitesse, l'intonation, la force, et la qualité associée au flux de données audio.

14. Dispositif comprenant des moyens configurés au moins pour mettre en oeuvre un procédé tel que revendiqué dans au moins l'une des revendications 1 à 13.

15. Programme informatique comprenant des instructions de programme qui sont adaptées pour faire en sorte, lorsqu'elles sont exécutées par un dispositif, que le dispositif au moins mette en oeuvre un procédé tel que revendiqué dans au moins l'une des revendications 1 à 13.

EP 2 659 486 B1

FIGURE 1

EP 2 659 486 B1

```
                    202
              ┌──────────────┐
              │              │
              │   Processor  │
              │              │
              └──────────────┘
                                          206
                              ┌──────────────┐
                              │              │
                              │User Interface│
                    204       │              │
              ┌──────────────┐└──────────────┘
              │              │
              │    Memory    │
              │              │
              └──────────────┘
```

200

FIGURE 2

FIGURE 3

EP 2 659 486 B1

EP 2 659 486 B1

```
┌─────────────────────────────────────────┐
│ Determine a value of the at least one speech │  ⟩ 402
│ element (Xᵥ) associated with an audio stream │
└─────────────────────────────────────────┘
                     │
                     ▼
┌─────────────────────────────────────────┐
│ Compare the value of the at least one speech │  ⟩ 404
│ element with at least one threshold value of the at │
│ least one speech element                 │
└─────────────────────────────────────────┘
                     │
                     ▼
┌─────────────────────────────────────────┐
│ Initiate processing of a video stream associated with │  ⟩ 406
│ the audio stream based on the comparison of the │
│ value of the at least one speech element with the at │
│ least one threshold value                │
└─────────────────────────────────────────┘
                     │
                     ▼
┌─────────────────────────────────────────┐
│ Determine an emotional state based on the │  ⟩ 408
│ processing of the video stream           │
└─────────────────────────────────────────┘
```

400

FIGURE 4

Determine at least one threshold value ($X_l$ or/and $X_u$) of at least one speech element ⟩ 502

Determine value of the at least one speech element ($X_v$) associated with an audio stream ⟩ 504

Modify the value of the at least one threshold limit of the at least one speech element ⟩ 510

Is a predetermined time period elapsed? 508

Yes

No

Is $X_v > X_u$ Or Is $X_v < X_l$ 506

No

Yes

Initiate processing of a video stream associated with the audio stream for detecting an emotional state ⟩ 512

Detected emotional state correct ? 514

No

Yes

Determine the emotional state based on the processing of the video stream ⟩ 516

500

FIGURE 5

**EP 2 659 486 B1**

**REFERENCES CITED IN THE DESCRIPTION**

**Patent documents cited in the description**

- JP 2009111938 A